# EUROPÄISCHE PATENTSCHRIFT

(11) **EP 3 321 116 B1**
(45) Veröffentlichungstag und Bekanntmachung des Hinweises auf die Patenterteilung: **04.08.2021**
(21) Anmeldenummer: 17193730.3
(22) Anmeldetag: 28.09.2017
(51) Int. Cl.: B60K 6/445, B60K 6/547, B60K 6/365, B60K 6/36, B60K 6/383, B60K 6/387, B60K 25/02, F16H 3/72, B60K 6/38

(54) **ANTRIEBSEINRICHTUNG FÜR EIN KRAFTFAHRZEUG**
DRIVE DEVICE FOR A MOTOR VEHICLE
DISPOSITIF D'ENTRAÎNEMENT POUR UN VÉHICULE AUTOMOBILE

(30) Priorität: 10.10.2016 DE 102016219618
(43) Veröffentlichungstag der Anmeldung: 16.05.2018
(73) Patentinhaber: AUDI AG, 85045 Ingolstadt (DE)
(72) Erfinder: Hoffmann, Thomas, 93339 Riedenburg (DE); Jägle, Karl, 85051 Ingolstadt (DE); Störmer, Markus, 92334 Berching (DE)

(56) Entgegenhaltungen:
- EP-A2- 0 773 127
- DE-A1- 19 934 696
- DE-A1-102006 037 577

## Beschreibung

Die Erfindung betrifft eine Antriebseinrichtung für ein Kraftfahrzeug, mit einem ersten Antriebsaggregat, einem zweiten Antriebsaggregat und einem Umlaufrädergetriebe, über dass das erste Antriebsaggregat und das zweite Antriebsaggregat miteinander und mit einer Abtriebswelle der Antriebseinrichtung koppelbar sind, wobei das erste Antriebsaggregat mit einem ersten Getriebeelement, das zweite Antriebsaggregat mit einem zweiten Getriebeelement und die Abtriebswelle mit einem dritten Getriebeelement des Umlaufrädergetriebes gekoppelt oder koppelbar ist, wobei das Umlaufrädergetriebe eine Verblockungskupplung zum Koppeln des zweiten Getriebeelements und des dritten Getriebeelements miteinander aufweist und das erste Getriebeelement mittels einer Bremseinrichtung bremsbar ist, wobei ein weiteres Antriebsaggregat mit dem ersten Antriebsaggregat mittels einer weiteren Schaltkupplung koppelbar ist.

Die Antriebseinrichtung dient dem Antreiben des Kraftfahrzeugs, insoweit also dem Bereitstellen eines auf das Antreiben des Kraftfahrzeugs gerichteten Drehmoments. Die Antriebseinrichtung stellt das Drehmoment, welches auch als Antriebsdrehmoment bezeichnet werden kann, an der Abtriebswelle der Antriebseinrichtung bereit. Beispielsweise ist die Abtriebswelle starr und/oder permanent mit einer Radachse des Kraftfahrzeugs oder wenigstens einem Rad des Kraftfahrzeugs, welches der Radachse zugeordnet sein kann, wirkverbunden. Die Wirkverbindung zwischen der Abtriebswelle und der Radachse beziehungsweise dem Rad kann über ein Getriebe, beispielsweise ein Differentialgetriebe, insbesondere ein Mittendifferentialgetriebe und/oder ein Achsdifferentialgetriebe, hergestellt sein.

Die Antriebseinrichtung verfügt über mehrere Antriebsaggregate, nämlich zumindest über das erste Antriebsaggregat und das zweite Antriebsaggregat. Die beiden Antriebsaggregate können grundsätzlich beliebig ausgestaltet sein. Beispielsweise sind die Antriebsaggregate unterschiedlichen Typs, sodass die Antriebseinrichtung insoweit als Hybridantriebseinrichtung vorliegt. Hierbei kann das erste Antriebsaggregat zum Beispiel in Form einer Brennkraftmaschine vorliegen und das zweite Antriebsaggregat als elektrische Maschine ausgestaltet sein.

Weiterhin weist die Antriebseinrichtung das Umlaufrädergetriebe auf. Über dieses sind das erste Antriebsaggregat, das zweite Antriebsaggregat und die Abtriebswelle miteinander gekoppelt oder zumindest miteinander koppelbar. Dabei sind das erste Antriebsaggregat, das zweite Antriebsaggregat und die Abtriebswelle an unterschiedliche Getriebeelemente des Umlaufrädergetriebes angebunden beziehungsweise anbindbar. Umgekehrt ist jedem der Getriebeelemente eines der Antriebsaggregate oder die Abtriebswelle zugeordnet. Dabei ist das erste Antriebsaggregat mit dem ersten Getriebeelement gekoppelt oder koppelbar, das zweite Antriebsaggregat mit dem zweiten Getriebeelement gekoppelt oder koppelbar und die Abtriebswelle mit dem dritten Getriebeelement gekoppelt oder koppelbar. Das Koppeln kann dabei für jeden der Fälle wahlweise beispielsweise starr und/oder permanent erfolgen.

Das Umlaufrädergetriebe kann auch als Planetenrädergetriebe bezeichnet werden und ist vorzugsweise als Umlaufzahnrädergetriebe ausgestaltet. Vorzugsweise sind das erste Antriebsaggregat und das zweite Antriebsaggregat ausschließlich über das Umlaufrädergetriebe miteinander gekoppelt beziehungsweise miteinander koppelbar. Zudem ist es bevorzugt vorgesehen, dass zumindest das zweite Antriebsaggregat nur über das Umlaufrädergetriebe mit der Abtriebswelle gekoppelt beziehungsweise koppelbar ist. Zusätzlich oder alternativ kann dies auch für das erste Antriebsaggregat vorgesehen sein.

Aus der Druckschrift DE 10 2006 037 577 A1 ist ein Nebenaggregatantrieb für ein Kraftfahrzeug mit einem Planetengetriebe bekannt, wobei ein erstes Element des Planetengetriebes mit einer ersten Elektromaschine, ein zweites Element mit einem Verbrennungsmotor und ein drittes Element mit mindestens einem Nebenaggregat im Leistungsaustausch stehen. Um sowohl beim Starten des Verbrennungsmotors als auch beim Antreiben des Fahrzeugs durch die erste Elektromaschine einen hohen Wirkungsgrad aufzuweisen, weist der Nebenaggregatantrieb eine erste Kupplung, durch die der Verbrennungsmotor mit der ersten Elektromaschine koppelbar ist, und einen ersten Freilauf auf, durch den das dritte Element des Planetengetriebes nur in eine Drehrichtung drehbar ist.

Es ist Aufgabe der Erfindung, eine Antriebseinrichtung für ein Kraftfahrzeug vorzuschlagen, welche gegenüber bekannten Antriebseinrichtungen Vorteile aufweist, insbesondere sich durch eine hohe Energieeffizienz sowie eine hohe Flexibilität auszeichnet.

Dies wird erfindungsgemäß mit einer Antriebseinrichtung mit den Merkmalen des Anspruchs 1 erreicht. Dabei ist vorgesehen, dass das weitere Antriebsaggregat über ein weiteres Umlaufrädergetriebe mit der Abtriebswelle koppelbar ist, wobei das erste Antriebsaggregat mittels der weiteren Schaltkupplung über das weitere Antriebsaggregat unter Umgehung des Umlaufrädergetriebes mit der Abtriebswelle koppelbar ist, und wobei eine Nebentriebwelle eines Nebentriebs mit dem weiteren Umlaufrädergetriebe gekoppelt ist. Grundsätzlich ist vorgesehen, dass das Umlaufrädergetriebe eine Verblockungskupplung zum Koppeln des zweiten Getriebeelements und des dritten Getriebeelements miteinander aufweist und das erste Getriebeelement mittels einer Bremseinrichtung bremsbar ist.

Über die Verblockungskupplung ist eine starre Kopplung des zweiten Getriebeelements und des dritten Getriebeelements miteinander möglich. Bei geöffneter Verblockungskupplung sind die beiden Getriebeelemente voneinander entkoppelt, während sie bei geschlossener Verblockungskupplung starr, also drehfest, miteinander verbunden sind. Mithilfe der Verblockungskupplung kann insoweit ein Verblocken des Umlaufrädergetriebes vorgenommen werden. Sind die beiden Getriebeelemente, also das zweite Getriebeelement und das dritte Getriebeelement, mittels der Verblockungskupplung miteinander gekoppelt, so läuft das Umlaufrädergetriebe im sogenannten Blockumlauf, in welchem die Getriebeelemente dieselbe Drehzahl aufweisen. Insbesondere weisen im Blockumlauf alle Getriebeelemente des Umlaufrädergetriebes, also das erste Getriebeelement, das zweite Getriebeelement sowie das dritte Getriebeelement, dieselbe Drehzahl auf.

Sind das zweite Getriebeelement und das dritte Getriebeelement mittels der Verblockungskupplung gegeneinander festgesetzt, so kann die Abtriebswelle allein mittels des zweiten Antriebsaggregats angetrieben werden, insbesondere bei von dem Umlaufrädergetriebe entkoppeltem erstem Antriebsaggregat. Zum Entkoppeln des ersten Antriebsaggregats und des Umlaufrädergetriebes ist zwischen diesen beispielsweise eine Schaltkupplung vorgesehen, welche im Rahmen der Antriebseinrichtung für das Kraftfahrzeug beispielsweise als Anfahrkupplung vorliegt. Bei geöffneter Schaltkupplung ist das Umlaufrädergetriebe von dem ersten Antriebsaggregat entkoppelt, insbesondere vollständig. Bei zumindest teilweise, insbesondere vollständig geschlossener Schaltkupplung ist dagegen eine Wirkverbindung zwischen dem ersten Antriebsaggregat und dem Umlaufrädergetriebe beziehungsweise dem ersten Getriebeelement hergestellt, vorzugsweise eine starre Wirkverbindung.

Bei geöffneter Schaltkupplung wäre das Antreiben der Abtriebswelle mittels des zweiten Antriebsaggregats zunächst lediglich bei geschlossener Verblockungskupplung möglich, also wenn das zweite Getriebeelement und das dritte Getriebeelement miteinander gekoppelt beziehungsweise gegeneinander festgesetzt sind, weil das von dem zweiten Antriebsaggregat bereitgestellte Drehmoment, welches an dem zweiten Getriebeelement anliegt, von dem Umlaufrädergetriebe auf das erste Getriebeelement und auf das dritte Getriebeelement aufgeteilt wird. Insoweit würde lediglich ein kleiner Teil des von dem zweiten Antriebsaggregat bereitgestellten Drehmoments an die Abtriebswelle übertragen werden.

Aus diesem Grund ist zusätzlich zu der Verblockungskupplung die Bremseinrichtung vorgesehen. Mittels dieser ist das erste Getriebeelement des Umlaufrädergetriebes bremsbar, vorzugsweise vollständig bremsbar, insoweit also festsetzbar. Das Bremsen des ersten Getriebeelements ist vorzugsweise bezüglich eines Maschinengehäuses des Umlaufrädergetriebes beziehungsweise der Antriebseinrichtung vorgesehen. Wird das erste Getriebeelement mittels der Bremseinrichtung gebremst oder sogar vollständig festgesetzt, so wird ein größerer Teil des von dem zweiten Antriebsaggregat bereitgestellten Drehmoments beziehungsweise das gesamte Drehmoment an die Abtriebswelle übertragen.

Mithilfe der Bremseinrichtung und der Verblockungskupplung sind insoweit zwei unterschiedliche Übersetzungen zwischen dem zweiten Antriebsaggregat und der Abtriebswelle realisierbar oder - falls zwischen dem Umlaufrädergetriebe und der Abtriebswelle ein Gangwechselgetriebe vorgesehen ist - eine Verdopplung der Anzahl der von dem Gangwechselgetriebe bereitgestellten Fahrgänge beziehungsweise Übersetzungen. Das kombinierte Vorsehen der Verblockungskupplung und der Bremseinrichtung ermöglicht entsprechend einen äußerst flexiblen Betrieb der Antriebseinrichtung, insbesondere ein flexibles Antreiben der Abtriebswelle allein mittels des zweiten Antriebsaggregats über das Umlaufrädergetriebe bei unterschiedlichen Übersetzungen.

Eine weitere Ausgestaltung der Erfindung sieht vor, dass die Bremseinrichtung eine Schaltkupplung aufweist, mittels der das erste Getriebeelement mit dem zum Bremsen des ersten Getriebeelements betreibbaren ersten Antriebsaggregat koppelbar ist. Zum Bremsen des ersten Getriebeelements wird dieses insoweit mit dem ersten Antriebsaggregat gekoppelt, welches derart betrieben wird, dass es das erste Getriebeelement bremst. Bevorzugt steht das erste Antriebsaggregat still, weist also eine Drehzahl von Null auf. Somit steht zum Bremsen des ersten Getriebeelements zunächst das Schleppmoment des ersten Antriebsaggregats zur Verfügung.

Selbstverständlich kann es zusätzlich oder alternativ vorgesehen sein, dass das erste Antriebsaggregat mechanisch festgesetzt wird, sodass eine Drehbewegung des ersten Antriebsaggregats unterbunden ist. Das Festsetzen des ersten Antriebsaggregats kann beispielsweise kraftschlüssig, also reibschlüssig, oder formschlüssig erfolgen. Insbesondere wird hierbei eine Antriebswelle des ersten Antriebsaggregats, beispielsweise eine Kurbelwelle der Brennkraftmaschine, gegenüber einem Maschinengehäuse beziehungsweise Kurbelgehäuse des ersten Antriebsaggregats festgesetzt.

Im Rahmen einer weiteren Ausgestaltung der Erfindung ist vorgesehen, dass die Bremseinrichtung einen Freilauf aufweist, der eine Drehbewegung des ersten Getriebeelements in einer ersten Drehrichtung zulässt und in einer der ersten Drehrichtung entgegengesetzten zweiten Drehrichtung unterbindet. Soll die Abtriebswelle mittels des zweiten Antriebsaggregats bei geöffneter Verblockungskupplung angetrieben werden, so wird gemäß den vorstehenden Ausführungen ein Teil des Drehmoments auf das erste Getriebeelement aufgeprägt. Der Freilauf ist nun derart ausgestaltet, dass er eine von diesem Drehmoment induzierte Drehbewegung des ersten Getriebeelements unterbindet, welche einer Drehrichtung des ersten Antriebsaggregats bei einem Normalbetrieb desselben entgegengerichtet ist. Die erste Drehrichtung entspricht also einer Normalbetriebsdrehrichtung des ersten Antriebsaggregats während seines Betriebs, wohingegen die zweite Drehrichtung der ersten Drehrichtung entgegengesetzt ist.

Eine vorteilhafte Ausgestaltung der Erfindung sieht vor, dass die Bremseinrichtung eine Bremse und/oder eine Sperreinrichtung aufweist. Die Bremse oder die Sperreinrichtung kann alternativ zu dem Freilauf vorliegen. Es kann jedoch auch vorgesehen sein, dass die Bremseinrichtung mehrere aus dem Freilauf, der Bremse und der Sperreinrichtung ausgewählte Elemente aufweist, also beispielsweise neben dem Freilauf über die Bremse und/oder die Sperreinrichtung verfügt. Die Bremse ermöglicht ein kraftschlüssiges Bremsen des ersten Getriebeelements, während die Sperreinrichtung das erste Getriebeelement formschlüssig festsetzt. Vorzugsweise ist die Bremswirkung der Bremse einstellbar, insbesondere stetig einstellbar, sodass mithilfe der Bremse ein gewünschtes Bremsmoment auf das erste Getriebeelement aufgeprägt werden kann.

Im Rahmen einer bevorzugten Ausführungsform der Erfindung ist vorgesehen, dass der Freilauf, die Bremse und/oder die Sperreinrichtung unmittelbar mit dem ersten Getriebeelement gekoppelt oder über die Schaltkupplung mit ihm koppelbar sind/ist. In ersterem Fall sind der Freilauf, die Bremse und/oder die Sperreinrichtung vorzugsweise starr und/oder permanent mit dem ersten Getriebeelement gekoppelt. Im anderen Fall soll die Wirkverbindung zwischen dem Freilauf, der Bremse und/oder der Sperreinrichtung einerseits und dem ersten Getriebeelement andererseits über die Schaltkupplung herstellbar sein, sodass insoweit die genannten Elemente mit dem ersten Getriebeelement koppelbar sind. Hierbei ist der Freilauf, die Bremse beziehungsweise die Sperreinrichtung beispielsweise starr und/oder permanent mit dem ersten Antriebsaggregat beziehungsweise der Antriebswelle des ersten Antriebsaggregats gekoppelt.

Eine weitere Ausgestaltung der Erfindung sieht vor, dass das dritte Getriebeelement über ein Gangwechselgetriebe mit der Abtriebswelle gekoppelt oder koppelbar ist. Auf eine derartige Ausgestaltung wurde vorstehend bereits hingewiesen. Das Gangwechselgetriebe ermöglicht das Einstellen eines aus mehreren Fahrgängen ausgewählten Fahrgangs beziehungsweise einer aus mehreren Übersetzungen ausgewählten Übersetzung zwischen dem dritten Getriebeelement und der Abtriebswelle. Mithilfe des Gangwechselgetriebes sind insoweit unterschiedliche Übersetzungen zwischen dem dritten Getriebeelement und der Abtriebswelle einstellbar.

Beispielsweise ermöglicht das Gangwechselgetriebe das Einstellen einer aus genau zwei unterschiedlichen Übersetzungen ausgewählten Übersetzung. Selbstverständlich kann jedoch auch eine größere Anzahl an Übersetzungen realisiert sein. Durch das Vorsehen der Verblockungskupplung sowie der Bremseinrichtung kann nun die Anzahl der mithilfe des Gangwechselgetriebes realisierbaren Übersetzungen verdoppelt werden.

Eine Weiterbildung der Erfindung sieht vor, dass ein weiteres Antriebsaggregat mittels einer weiteren Schaltkupplung mit dem ersten Antriebsaggregat oder der Abtriebswelle koppelbar ist, insbesondere unter Umgehung des Umlaufrädergetriebes. Das weitere Antriebsaggregat kann beispielsweise als elektrische Maschine ausgestaltet sein. Das weitere Antriebsaggregat soll über die weitere Schaltkupplung entweder mit dem ersten Antriebsaggregat oder der Abtriebswelle koppelbar sein. Die über die weitere Schaltkupplung zwischen dem weiteren Antriebsaggregat und dem ersten Antriebsaggregat beziehungsweise der Abtriebswelle hergestellte Wirkverbindung verläuft bevorzugt nicht über das Umlaufrädergetriebe.

Es kann auch vorgesehen sein, dass das weitere Antriebsaggregat mittels der weiteren Schaltkupplung mit dem ersten Antriebsaggregat koppelbar und permanent mit der Abtriebswelle gekoppelt ist, beispielsweise über ein weiteres Umlaufrädergetriebe. In diesem Fall kann das erste Antriebsaggregat entweder über das Umlaufrädergetriebe oder über das weitere Umlaufrädergetriebe oder über beide mit der Abtriebswelle gekoppelt werden. Ebenso kann es vorgesehen sein, dass das weitere Antriebsaggregat einerseits mittels der weiteren Schaltkupplung entweder mit dem ersten Antriebsaggregat oder der Abtriebswelle koppelbar und andererseits mit dem jeweils anderen, also der Abtriebswelle oder dem ersten Antriebsaggregat, über einen Freilauf gekoppelt ist.

In einer weiteren bevorzugten Ausgestaltung der Erfindung kann vorgesehen sein, dass das weitere Antriebsaggregat mit der Nebentriebwelle des Nebentriebs der Antriebseinrichtung gekoppelt oder koppelbar ist. Der Nebentrieb ist bevorzugt in die Antriebseinrichtung integriert, sodass er beziehungsweise wenigstens ein Nebenaggregat des Nebentriebs besonders energieeffizient betrieben werden kann, während gleichzeitig die Antriebseinrichtung flexibel einsetzbar ist, insbesondere in zahlreichen Betriebszuständen des Kraftfahrzeugs.

Insbesondere soll eine Wechselwirkung zwischen den Antriebsaggregaten und dem Nebentrieb realisiert sein. Das bedeutet, dass der Nebentrieb beziehungsweise die Nebentriebwelle des Nebentriebs wahlweise mittels des ersten Antriebsaggregats, des weiteren Antriebsaggregats und/oder mittels kinetischer Energie des Kraftfahrzeugs angetrieben werden kann. Letzteres ist durch eine von dem ersten Antriebsaggregat unabhängige Anbindung des Nebentriebs beziehungsweise der Nebentriebwelle an die Abtriebswelle der Antriebseinrichtung realisiert oder zumindest optional realisierbar.

Schließlich sieht die Erfindung vor, dass das weitere Antriebsaggregat mit dem ersten Antriebsaggregat mittels der weiteren Schaltkupplung koppelbar ist, wobei das weitere Antriebsaggregat über ein weiteres Umlaufrädergetriebe mit der Abtriebswelle koppelbar ist, wobei das erste Antriebsaggregat mittels der weiteren Schaltkupplung über das weitere Antriebsaggregat unter Umgehung des Umlaufrädergetriebes mit der Abtriebswelle koppelbar ist, und wobei die Nebentriebwelle des Nebentriebs mit dem weiteren Umlaufrädergetriebe gekoppelt ist.

Zum einen kann es also vorgesehen sein, dass das erste Antriebsaggregat mittels der weiteren Schaltkupplung über das weitere Antriebsaggregat mit der Abtriebswelle koppelbar ist. Beispielsweise ist eine Antriebswelle des weiteren Antriebsaggregats drehfest mit der Antriebswelle des ersten Antriebsaggregats koppelbar, sodass bei geschlossener Schaltkupplung die Antriebswellen des ersten Antriebsaggregats und des weiteren Antriebsaggregats im Wesentlichen dieselbe Drehzahl aufweisen. Hierbei kann es selbstverständlich vorgesehen sein, dass in der Wirkverbindung zwischen dem ersten Antriebsaggregat und dem weiteren Antriebsaggregat eine Schwingungsdämpfungseinrichtung, beispielsweise ein Zweimassenschwungrad oder dergleichen, vorliegt. Dies ist insbesondere der Fall, falls das erste Antriebsaggregat in Form der Brennkraftmaschine vorliegt.

Besonders bevorzugt ist es vorgesehen, dass das erste Antriebsaggregat mittels der weiteren Schaltkupplung über das weitere Antriebsaggregat und das weitere Umlaufrädergetriebe mit der Abtriebswelle koppelbar ist. Hierzu ist beispielsweise das weitere Umlaufrädergetriebe beziehungsweise ein Getriebeelement des weiteren Umlaufrädergetriebes starr und/oder permanent mit dem weiteren Antriebsaggregat gekoppelt, welches seinerseits mittels der weiteren Schaltkupplung mit dem ersten Antriebsaggregat koppelbar ist.

Zum anderen kann es vorgesehen sein, dass die Nebentriebwelle des Nebentriebs mit dem weiteren Umlaufrädergetriebe gekoppelt ist. Der Nebentrieb ist insoweit - in ersterem Fall - mit wenigstens einem Getriebeelement des weiteren Umlaufrädergetriebes wirkverbunden, insbesondere starr und/oder permanent. Das bedeutet, dass der Nebentrieb beziehungsweise die Nebentriebwelle stets dieselbe Drehzahl aufweist wie das Getriebeelement, mit welchem er beziehungsweise sie gekoppelt ist. Vorzugsweise ist die Nebentriebwelle über das weitere Umlaufrädergetriebe mit dem weiteren Antriebsaggregat gekoppelt, insbesondere permanent, oder zumindest koppelbar. Das bedeutet vorzugsweise, dass die Nebentriebwelle über das weitere Umlaufrädergetriebe und die weitere Schaltkupplung mit dem ersten Antriebsaggregat wirkverbindbar ist.

Entsprechend kann die Nebentriebwelle sowohl mithilfe des ersten Antriebsaggregats als auch des weiteren Antriebsaggregats angetrieben werden. Weil zudem das weitere Umlaufrädergetriebe mit der Abtriebswelle der Antriebseinrichtung gekoppelt oder zumindest koppelbar ist, kann zudem die kinetische Energie des Kraftfahrzeugs zum Antreiben der Nebentriebwelle und mithin wenigstens eines Nebenaggregats des Nebentriebs herangezogen werden.

Beschrieben wird weiterhin ein Verfahren zum Betreiben einer Antriebseinrichtung für ein Kraftfahrzeug, insbesondere eine Antriebseinrichtung gemäß den vorstehenden Ausführungen, wobei die Antriebseinrichtung über ein erstes Antriebsaggregat, ein zweites Antriebsaggregat und ein Umlaufrädergetriebe verfügt, über das das erste Antriebsaggregat und das zweite Antriebsaggregat miteinander und mit einer Abtriebswelle der Antriebseinrichtung koppelbar sind, wobei das erste Antriebsaggregat mit einem ersten Getriebeelement, das zweite Antriebsaggregat mit einem zweiten Getriebeelement und die Abtriebswelle mit einem dritten Getriebeelement des Umlaufrädergetriebes gekoppelt oder koppelbar ist. Dabei ist vorgesehen, dass das zweite Getriebeelement und das dritte Getriebeelement mittels einer Verblockungskupplung des Umlaufrädergetriebes miteinander gekoppelt werden können und das erste Getriebeelement mittels einer Bremseinrichtung gebremst werden kann.

Auf die Vorteile einer derartigen Vorgehensweise beziehungsweise einer derartigen Ausgestaltung der Antriebseinrichtung wurde bereits hingewiesen. Sowohl das Verfahren als auch die Antriebseinrichtung können gemäß den vorstehenden Ausführungen weitergebildet sein, sodass insoweit auf diese verwiesen wird.

Insbesondere falls die vorstehend beschriebene Ausgestaltung beziehungsweise Anbindung des Nebentriebs realisiert ist, kann es vorgesehen sein, eine Parkbremse für das Kraftfahrzeug durch das gleichzeitige Herstellen von Wirkverbindungen des ersten Antriebsaggregats mit der Abtriebswelle einerseits über das Umlaufrädergetriebe und andererseits über das weitere Umlaufrädergetriebe zu realisieren. Hierzu liegen in den unterschiedlichen Wirkverbindungen voneinander unterschiedliche Übersetzungen zwischen dem ersten Antriebsaggregat und der Abtriebswelle vor, sodass die Abtriebswelle verblockt ist.

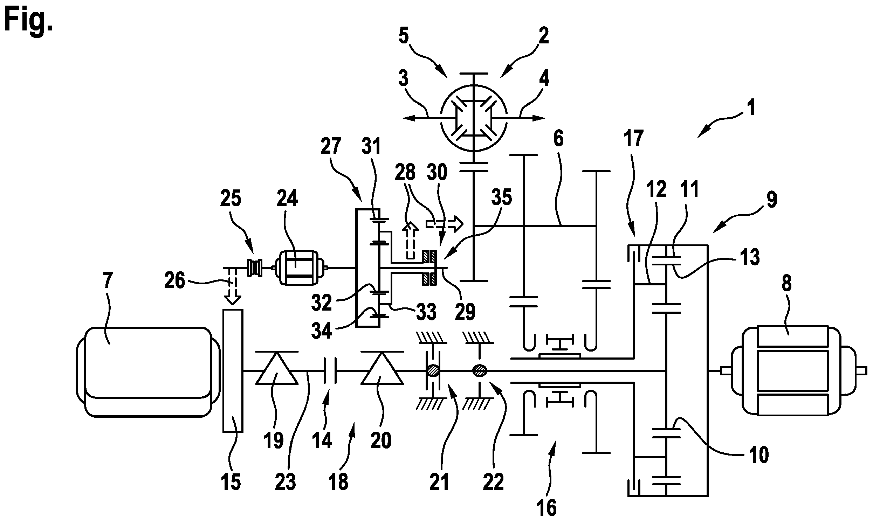

Die Erfindung wird nachfolgend anhand der in der Zeichnung dargestellten Ausführungsbeispiele näher erläutert, ohne dass eine Beschränkung der Erfindung erfolgt. Dabei zeigt die einzige
- Figur: eine schematische Darstellung einer Antriebseinrichtung für ein Kraftfahrzeug.

Die Figur zeigt eine schematische Darstellung einer Antriebseinrichtung 1 für ein Kraftfahrzeug, welches hier nicht näher dargestellt ist. Die Antriebseinrichtungl dient dem Antreiben einer Radachse 2 des Kraftfahrzeugs, welche zwei Teilachsen 3 und 4 aufweist, die über ein Getriebe 5, insbesondere ein Achsdifferentialgetriebe, mit einer Abtriebswelle 6 der Antriebseinrichtung 1 wirkverbunden ist. Jeder der Teilachsen 3 und 4 ist vorzugsweise wenigstens ein hier nicht dargestelltes Rad des Kraftfahrzeugs zugeordnet beziehungsweise mit diesem starr und/oder permanent verbunden.

Die Antriebseinrichtung 1 verfügt über ein erstes Antriebsaggregat 7 und ein zweites Antriebsaggregat 8. Die beiden Antriebsaggregate 7 und 8 sind über ein Umlaufrädergetriebe 9 miteinander koppelbar. Das Umlaufrädergetriebe 9 weist ein erstes Getriebeelement 10, ein zweites Getriebeelement 11 und ein drittes Getriebeelement 12 auf. An dem dritten Getriebeelement 12, welches insoweit als Umlaufradträger ausgestaltet ist, ist wenigstens ein Umlaufrad 13 drehbar gelagert.

Das erste Getriebeelement 10 und das zweite Getriebeelement 11 stehen über das Umlaufrad 13 miteinander in Wirkverbindung. Hierzu kämmt bevorzugt eine Verzahnung des Umlaufrads 13 mit einer Verzahnung des ersten Getriebeelements 10 und einer Verzahnung des zweiten Getriebeelements 11. In dem hier dargestellten Ausführungsbeispiel ist das erste Getriebeelement 10 als Sonnenrad und das zweite Getriebeelement 11 als Hohlrad ausgebildet. Auch eine umgekehrte Konfiguration kann jedoch vorgesehen sein.

Das erste Antriebsaggregat 7 ist mit dem ersten Getriebeelement 10 koppelbar, während das zweite Antriebsaggregat 8 mit dem zweiten Getriebeelement 11 gekoppelt ist, insbesondere starr und/oder permanent. Zwischen dem ersten Antriebsaggregat 7 und dem ersten Getriebeelement 10 ist eine Schaltkupplung 14 vorgesehen, wobei in einer ersten Schaltstellung der Schaltkupplung 14 das erste Antriebsaggregat 7 von dem ersten Getriebeelement 10 entkoppelt und in einer zweiten Schaltstellung mit ihm gekoppelt ist, vorzugsweise ebenfalls starr und/oder permanent. Dem ersten Antriebsaggregat 7 kann eine Schwingungsdämpfungseinrichtung 15 zugeordnet sein, welche beispielsweise als Zweimassenschwungrad ausgestaltet ist.

Das dritte Getriebeelement 12 des Umlaufrädergetriebes 9 ist über ein Gangwechselgetriebe 16 mit der Abtriebswelle 6 gekoppelt. Die Abtriebswelle 6 liegt dabei in Form einer Ausgangswelle des Gangwechselgetriebes 16 vor beziehungsweise wird von dieser wenigstens bereichsweise ausgebildet. Das Gangwechselgetriebe 16 ermöglicht das Einstellen wenigstens zweier unterschiedlicher Übersetzungen zwischen dem dritten Getriebeelement 12 und der Abtriebswelle 6.

Das Umlaufrädergetriebe 9 weist eine Verblockungskupplung 17 auf, mittels welcher das zweite Getriebeelement 11 und das dritte Getriebeelement 12 miteinander koppelbar sind. In einer ersten Schaltstellung der Verblockungskupplung 17 sind das erste Getriebeelement 11 und das zweite Getriebeelement 12 voneinander entkoppelt beziehungsweise lediglich über das Umlaufrad 13 miteinander wirkverbunden. In einer zweiten Schaltstellung sind dagegen die Getriebeelemente 11 und 12 gegeneinander festgesetzt, insbesondere starr beziehungsweise drehfest. Bei geschlossener Verblockungskupplung 17 kann die Abtriebswelle 6 auch bei geöffneter Schaltkupplung 14 ohne weiteres allein mittels des zweiten Antriebsaggregats 8 über das Umlaufrädergetriebe 9 angetrieben werden, jedoch üblicherweise nur mit geringem Drehmoment.

Um das Antreiben auch mit einem höheren Drehmoment und/oder bei geöffneter Schaltkupplung 14 zu ermöglichen, ist eine Bremseinrichtung 18 vorgesehen, die zum Bremsen des ersten Getriebeelements 10, insbesondere zum Festsetzen beziehungsweise Blockieren des ersten Getriebeelements 10, ausgebildet ist. Die Bremseinrichtung 18 kann beispielsweise die Schaltkupplung 14 umfassen. Ist dies der Fall, so kann das erste Getriebeelement 10 mittels des ersten Antriebsaggregats 7 gebremst werden, welches entsprechend betrieben wird.

Das dabei über das Umlaufrädergetriebe 9 auf die Abtriebswelle 6 übertragbare Drehmoment hängt jedoch von dem ersten Antriebsaggregat 7, insbesondere von dessen Schleppmoment, ab. Aus diesem Grund ist es bevorzugt vorgesehen, dass die Bremseinrichtung 18 einen Freilauf 19, einen Freilauf 20, eine Bremse 21 und/oder eine Sperreinrichtung 22 aufweist. Grundsätzlich ist eine dieser Einrichtungen ausreichend, sodass also die Bremseinrichtung 18 über den Freilauf 19 oder den Freilauf 20 oder die Bremse 21 oder die Sperreinrichtung 22 verfügt. Selbstverständlich können auch mehrere dieser Einrichtungen oder alle dieser Einrichtungen vorgesehen sein. Beispielsweise ist einer der Freiläufe 19 oder 20 in Kombination mit der Bremse 21 oder der Sperreinrichtung 22 vorgesehen.

Der Freilauf 19 lässt eine Drehbewegung einer Antriebswelle 23 des ersten Antriebsaggregats 7 in einer ersten Drehrichtung zu und unterbindet sie in einer der ersten Drehrichtung entgegengesetzten zweiten Drehrichtung. Der Freilauf 20 lässt hingegen eine Drehbewegung des ersten Getriebeelements 10 in einer ersten Drehrichtung zu und unterbindet sie in einer der ersten Drehrichtung entgegengesetzten zweiten Drehrichtung. Mittels des Freilaufs 19 kann insoweit das erste Getriebeelement 10 lediglich bei geschlossener Schaltkupplung 14 gebremst beziehungsweise festgesetzt werden, nämlich in die zweite Drehrichtung. Der Freilauf 20 setzt dagegen das erste Getriebeelement 10 unabhängig von der Schaltstellung der Schaltkupplung 14 in der zweiten Drehrichtung fest.

Die Bremse 21 ermöglicht bevorzugt das Einstellen einer bestimmten Bremskraft beziehungsweise eines bestimmten Bremsdrehmoments, welches sie auf das erste Getriebeelement 10 ausübt. Sie arbeitet vorzugsweise kraftschlüssig. Die Sperreinrichtung 22 dient dagegen bevorzugt dem formschlüssigen Festsetzen des ersten Getriebeelements 10. Mithilfe der Bremseinrichtung 18 kann die Abtriebswelle 6 auch bei geöffneter Verblockungskupplung 17 allein mittels des zweiten Antriebsaggregats 8 angetrieben werden, weil das dabei auf das erste Getriebeelement 10 wirkende Drehmoment sich gegen die Bremseinrichtung 18 abstützt. Das bedeutet, dass mithilfe des Umlaufrädergetriebes 9 mehrere Übersetzungen zwischen dem zweiten Antriebsaggregat 8 und der Abtriebswelle 6 einstellbar sind beziehungsweise die Anzahl der mittels des Gangwechselgetriebes 16 einstellbaren Übersetzungen verdoppelt werden kann.

Weiterhin kann die Antriebseinrichtung 1 über ein weiteres Antriebsaggregat 24 verfügen. Dieses ist mittels einer weiteren Schaltkupplung 25 mit dem ersten Antriebsaggregat 7 koppelbar. Dies ist durch den Pfeil 26 angedeutet. Das Antriebsaggregat 24 ist über ein weiteres Umlaufrädergetriebe 27 mit der Abtriebswelle 6 gekoppelt beziehungsweise koppelbar. Dies ist durch die Pfeile 28 angedeutet. Weiterhin ist das weitere Antriebsaggregat 24 mit einer Nebentriebwelle 29 eines Nebentriebs 30 der Antriebseinrichtung 1 gekoppelt beziehungsweise koppelbar.

Das weitere Umlaufrädergetriebe 27 weist ein erstes Getriebeelement 31, ein zweites Getriebeelement 32 sowie ein drittes Getriebeelement 33 auf. An dem dritten Getriebeelement 33 ist wenigstens ein Umlaufrad 34 drehbar gelagert, über welches das erste Getriebeelement 31 und das zweite Getriebeelement 32 miteinander gekoppelt sind. Hierzu kämmt eine Verzahnung des Umlaufrads 34 sowohl mit einer Verzahnung des ersten Getriebeelements 31 als auch mit einer Verzahnung des zweiten Getriebeelements 32. Das erste Getriebeelement 31 liegt hier in Form eines Hohlrads, das zweite Getriebeelement 32 in Form eines Sonnenrads und das dritte Getriebeelement 33 in Form eines Umlaufradträgers vor.

Das erste Getriebeelement 31 ist vorzugsweise starr mit dem weiteren Antriebsaggregat 24 gekoppelt. Das zweite Getriebeelement 32 ist mit der Nebentriebwelle 29 gekoppelt, vorzugsweise starr und/oder permanent. Das dritte Getriebeelement 33 ist mit der Abtriebswelle 6 gekoppelt, insbesondere starr und/oder permanent oder mit ihr koppelbar. Dem weiteren Umlaufrädergetriebe 27 kann eine Verblockungskupplung 35 zugeordnet sein, mittels welcher das zweite Getriebeelement 32 und das dritte Getriebeelement 33 gegeneinander festsetzbar sind. In einer ersten Schaltstellung der Verblockungskupplung 35 sind mithin das zweite Getriebeelement 32 und das dritte Getriebeelement 33 voneinander entkoppelt und in einer zweiten Schaltstellung miteinander gekoppelt, vorzugsweise starr.

Besonders bevorzugt ist es vorgesehen, mittels des weiteren Antriebsaggregats 24 eine Drehzahlregelung der Nebentriebwelle 29 vorzunehmen. Hierzu ist bevorzugt das weitere Antriebsaggregat 24 von dem ersten Antriebsaggregat 7 entkoppelt beziehungsweise ist die weitere Schaltkupplung 25 geöffnet, insbesondere vollständig. Weiterhin ist die Verblockungskupplung 35 geöffnet, sodass die Getriebeelemente 32 und 33 bezüglich einander freigegeben, also nicht miteinander gekoppelt sind. Beispielsweise ist es nun vorgesehen, die Nebentriebwelle 29 mit der Abtriebswelle 6 zu koppeln und entsprechend - falls sich das Kraftfahrzeug in Bewegung befindet - mit kinetischer Energie des Kraftfahrzeugs anzutreiben. Selbstverständlich kann die beschriebene Vorgehensweise jedoch auch im Stillstand des Kraftfahrzeugs Verwendung finden.

Die Drehzahl der Nebentriebwelle 29 stellt sich bei geöffneter Verblockungskupplung 35 in Abhängigkeit von der Drehzahl der Abtriebswelle 6 und der Drehzahl des weiteren Antriebsaggregats 24 ein. Entsprechend ist es vorgesehen, die Drehzahl des weiteren Antriebsaggregats 24 derart zu wählen und einzustellen, dass die Drehzahl der Nebentriebwelle 29 unabhängig von der Drehzahl der Abtriebswelle 6 einer Solldrehzahl entspricht. Somit kann beispielsweise die Drehzahl der Nebentriebwelle 29 mittels des weiteren Antriebsaggregats 24, insbesondere auch bei einer Drehzahländerung der Abtriebswelle 6, konstant gehalten beziehungsweise auf die Solldrehzahl eingestellt, insbesondere geregelt, werden.

Bei Stillstand der Abtriebswelle 6 wird nun die gesamte an der Nebentriebwelle 29 anliegende Leistung mittels des weiteren Antriebsaggregats 24 bereitgestellt. Je höher die Drehzahl der Abtriebswelle 6, umso höher wird nun - bei gleichbleibender Drehzahl der Nebentriebwelle 29 - der Anteil der an der Nebentriebwelle 29 anliegenden Leistung, die von der Abtriebswelle 6 bereitgestellt wird. Umgekehrt wird selbstredend der von dem weiteren Antriebsaggregat 24 bereitgestellte Anteil geringer.

Zusätzlich oder alternativ kann es vorgesehen sein, die Abtriebswelle 6 über das weitere Umlaufrädergetriebe 27 mit dem ersten Antriebsaggregat 7 zu koppeln, insbesondere drehfest. Hierzu werden beispielsweise die Schaltkupplung 25 und die Verblockungskupplung 35 geschlossen, insbesondere vollständig. Hierbei ist bevorzugt die Schaltkupplung 14 geöffnet, wenngleich das Koppeln der Abtriebswelle 6 mit dem ersten Antriebsaggregat 7 über das weitere Umlaufrädergetriebe 27 auch bei geschlossener Schaltkupplung 14 vorgenommen werden kann. Die Vorgehensweise kann unabhängig von dem Bremsen des ersten Getriebeelements 10 mittels der Bremseinrichtung 18 vorgesehen sein, insbesondere unabhängig von dem Vorliegen eines oder mehrerer der Freiläufe 19 und 20.

Auf diese Art und Weise kann beispielsweise ein Schubdrehmoment des ersten Antriebsaggregats 7 an der Abtriebswelle 6 bereitgestellt werden, insbesondere zum Bremsen der Abtriebswelle 6 und mithin des Kraftfahrzeugs. Beispielsweise kann diese Vorgehensweise Anwendung finden, wenn das zweite Antriebsaggregat 8 nicht zum Rekuperieren betrieben werden kann, insbesondere aufgrund eines vollen Energiespeichers. Der Energiespeicher dient normalerweise dem Zwischenspeichern der von dem zweiten Antriebsaggregat 8 während des Rekuperierens bereitgestellten elektrischen Energie. Ist der Energiespeicher jedoch vollständig gefüllt oder weist einen Ladestand auf, der größer ist als ein Maximalladestand, so soll das erste Antriebsaggregat 7 auf die beschriebene Art und Weise zum Bremsen der Abtriebswelle 6 herangezogen werden.

Eine Ausgestaltung der Antriebseinrichtung 1 beziehungsweise des Nebentriebs 30 auf die beschriebene Art und Weise ermöglicht ein äußerst flexibles und energieeffizientes Betreiben der Antriebseinrichtung 1. Durch das Vorsehen der Bremseinrichtung 18 kann zudem eine vergleichsweise hohe Anzahl an Übersetzungen zwischen dem zweiten Antriebsaggregat 8 und der Abtriebswelle 6 realisiert sein, auch wenn die Abtriebswelle 6 über das Umlaufrädergetriebe 9 allein mittels des zweiten Antriebsaggregats 8 angetrieben wird.

Die hier dargestellte Ausgestaltung mit dem Nebentrieb 30 ermöglicht jedoch auch einen Betrieb der Antriebseinrichtung 1, bei welchem die Abtriebswelle 6 mittels des zweiten Antriebsaggregats 8 über das Umlaufrädergetriebe 9 bei geöffneter Schaltkupplung 14 angetrieben wird, wobei durch entsprechendes Einstellen der Verblockungskupplung 17 eine von mehreren Übersetzungen zwischen dem zweiten Antriebsaggregat 8 und der Abtriebswelle 6 eingestellt wird.

Zusätzlich kann es vorgesehen sein, die Abtriebswelle 6 mittels des ersten Antriebsaggregats 7 anzutreiben, nämlich über das weitere Umlaufrädergetriebe 27. Hierzu ist die Schaltkupplung 14 geöffnet und die weitere Schaltkupplung 25 geschlossen. Durch entsprechendes Einstellen der Verblockungskupplung 35 kann auch hier eine von mehreren Übersetzungen zwischen dem ersten Antriebsaggregat 7 und der Abtriebswelle 6 eingestellt werden.

## Patentansprüche

1. Antriebseinrichtung (1) für ein Kraftfahrzeug, mit einem ersten Antriebsaggregat (7), einem zweiten Antriebsaggregat (8) und einem Umlaufrädergetriebe (9), über das das erste Antriebsaggregat (7) und das zweite Antriebsaggregat (8) miteinander und mit einer Abtriebswelle (6) der Antriebseinrichtung (1) koppelbar sind, wobei das erste Antriebsaggregat (7) mit einem ersten Getriebeelement (10), das zweite Antriebsaggregat (8) mit einem zweiten Getriebeelement (11) und die Abtriebswelle (6) mit einem dritten Getriebeelement (12) des Umlaufrädergetriebes (9) gekoppelt oder koppelbar ist, wobei das Umlaufrädergetriebe (9) eine Verblockungskupplung (17) zum Koppeln des zweiten Getriebeelements (11) und des dritten Getriebeelements (12) miteinander aufweist und das erste Getriebeelement (10) mittels einer Bremseinrichtung (18) bremsbar ist, wobei
ein weiteres Antriebsaggregat (24) mit dem ersten Antriebsaggregat (7) mittels einer weiteren Schaltkupplung (25) koppelbar ist, **dadurch gekennzeichnet, dass** das weitere Antriebsaggregat (24) über ein weiteres Umlaufrädergetriebe (27) mit der Abtriebswelle (6) koppelbar ist, wobei das erste Antriebsaggregat (7) mittels der weiteren Schaltkupplung (25) über das weitere Antriebsaggregat (24) unter Umgehung des Umlaufrädergetriebes (9) mit der Abtriebswelle (6) koppelbar ist, und wobei eine Nebentriebwelle (29) eines Nebentriebs (30) mit dem weiteren Umlaufrädergetriebe (27) gekoppelt ist.

2. Antriebseinrichtung nach Anspruch 1, **dadurch gekennzeichnet, dass** die Bremseinrichtung (18) eine Schaltkupplung (14) aufweist, mittels der das erste Getriebeelement (10) mit dem zum Bremsen des ersten Getriebeelements (10) betreibbaren ersten Antriebsaggregat (7) koppelbar ist.

3. Antriebseinrichtung nach einem der vorhergehenden Ansprüche, **dadurch gekennzeichnet, dass** die Bremseinrichtung (18) einen Freilauf (19,20) aufweist, der eine Drehbewegung des ersten Getriebeelements (10) in einer ersten Drehrichtung zulässt und in einer der ersten Drehrichtung entgegengesetzten zweiten Drehrichtung unterbindet.

4. Antriebseinrichtung nach einem der vorhergehenden Ansprüche, **dadurch gekennzeichnet, dass** die Bremseinrichtung (18) eine Bremse (21) und/oder eine Sperreinrichtung (22) aufweist.

5. Antriebseinrichtung nach einem der Ansprüche 2 bis 4, **dadurch gekennzeichnet, dass** der Freilauf (19,20), die Bremse (21) und/oder die Sperreinrichtung (22) unmittelbar mit dem ersten Getriebeelement (10) gekoppelt oder über die Schaltkupplung (14) mit ihm koppelbar sind/ist.

6. Antriebseinrichtung nach einem der vorhergehenden Ansprüche, **dadurch gekennzeichnet, dass** das dritte Getriebeelement (12) über ein Gangwechselgetriebe (16) mit der Abtriebswelle (6) gekoppelt oder koppelbar ist.

7. Antriebseinrichtung nach einem der vorhergehenden Ansprüche, **dadurch gekennzeichnet, dass** das weitere Antriebsaggregat (24) mit der Nebentriebwelle (29) des Nebentriebs (30) der Antriebseinrichtung (1) gekoppelt oder koppelbar ist.

## Claims

1. Drive apparatus (1) for a motor vehicle, having a first drive assembly (7), a second drive assembly (8) and a epicyclic gear train (9), by means of which the first drive assembly (7) and the second drive assembly (8) can be coupled to one another and to a driven shaft (6) of the drive apparatus (1), wherein the first drive assembly (7) is coupled or can be coupled to a first gear element (10), the second drive assembly (8) is coupled or can be coupled to a second gear element (11) and the driven shaft (6) is coupled or can be coupled to a third gear element (12) of the epicyclicgear train (9), wherein the epicyclic gear train (9) has an interlocking coupling (17) for coupling the second gear element (11) and the third gear element (12) to one another and the first gear element (10) can be braked by means of a braking apparatus (18), wherein an further drive assembly (24) can be coupled by means of a further clutch coupling (25) to the first drive assembly (7), **characterised in that** the further drive assembly (24) can be coupled via a further epicyclic gear train (27) to the driven shaft (6), wherein the first drive assembly (7) can be coupled to the driven shaft (6) by means of the further clutch coupling (25) via the further drive assembly (24) by bypassing the epicyclic gear train (9), and wherein a secondary drive shaft (29) of a secondary drive (30) is coupled to the further epicyclic gear train (27).

2. Drive apparatus according to claim 1, **characterised in that** the braking apparatus (18) has a clutch coupling (14), by means of which the first gear element (10) can be coupled to the first drive assembly (7) drivable for braking the first gear element (10).

3. Drive apparatus according to any of the preceding claims, **characterised in that** the braking apparatus (18) has a free wheel (19, 20) which allows a rotational movement of the first gear element (10) in a first direction of rotation and prevents it in a second direction of rotation opposite the first direction of rotation.

4. Drive apparatus according to any of the preceding claims, **characterised in that** the braking apparatus (18) has a brake (21) and/or a locking apparatus (22).

5. Drive apparatus according to any of claims 2 to 4, **characterised in that** the free wheel (19, 20), the brake (21) and/or the locking apparatus (22) is/are coupled directly to the first gear element (10) or can be coupled thereto via the clutch coupling (14).

6. Drive apparatus according to any of the preceding claims, **characterised in that** the third gear element (12) is coupled or can be coupled via a gearbox (16) to the driven shaft (6).

7. Drive apparatus according to any of the preceding claims, **characterised in that** the further drive assembly (24) is coupled or can be coupled to the secondary drive shaft (29) of the secondary drive (30) of the drive apparatus (1).

## Revendications

1. Dispositif d'entraînement (1) pour un véhicule automobile, avec un premier groupe d'entraînement (7), un second groupe d'entraînement (8) et un engrenage planétaire (9) par le biais duquel le premier groupe d'entraînement (7) et le second groupe d'entraînement (8) peuvent être couplés l'un à l'autre et avec un arbre de sortie (6) du dispositif d'entraînement (1), dans lequel le premier groupe d'entraînement (7) est couplé ou peut être couplé avec un premier élément de transmission (10), le second groupe d'entraînement (8) est couplé ou peut être couplé avec un deuxième élément de transmission (11) et l'arbre de sortie (6) est couplé ou peut être couplé avec un troisième élément de transmission (12) de l'engrenage planétaire (9), dans lequel l'engrenage planétaire (9) présente un couplage de blocage (17) pour le couplage du deuxième élément de transmission (11) et du troisième élément de transmission (12) l'un à l'autre et le premier élément de transmission (10) peut être freiné au moyen d'un dispositif de freinage (18),
dans lequel un autre groupe d'entraînement (24) peut être couplé avec le premier groupe d'entraînement (7) au moyen d'un autre embrayage (25), **caractérisé en ce que** l'autre groupe d'entraînement (24) peut être couplé par le biais d'un autre engrenage planétaire (27) avec l'arbre de sortie (6), dans lequel le premier groupe d'entraînement (7) peut être couplé au moyen de l'autre embrayage (25) par le biais de l'autre groupe d'entraînement (24) en contournant l'engrenage planétaire (9) avec l'arbre de sortie (6), et dans lequel un arbre d'entraînement annexe (29) d'un entraînement annexe (30) est couplé avec l'autre engrenage planétaire (27).

2. Dispositif d'entraînement selon la revendication 1, **caractérisé en ce que** le dispositif de freinage (18) présente un embrayage (14) au moyen duquel le premier élément de transmission (10) peut être couplé avec le premier groupe d'entraînement (7) pouvant fonctionner pour freiner le premier élément de transmission (10).

3. Dispositif d'entraînement selon l'une quelconque des revendications précédentes, **caractérisé en ce que** le dispositif de freinage (18) présente une roue libre (19, 20) qui permet un mouvement de rotation du premier élément de transmission (10) dans une première direction de rotation et l'empêche dans une seconde direction de rotation opposée à la première direction de rotation.

4. Dispositif d'entraînement selon l'une quelconque des revendications précédentes, **caractérisé en ce que** le dispositif de freinage (18) présente un frein (21) et/ou un dispositif de verrouillage (22).

5. Dispositif d'entraînement selon l'une quelconque des revendications 2 à 4, **caractérisé en ce que** la roue libre (19, 20), le frein (21) et/ou le dispositif de verrouillage (22) est/sont couplé(es) directement avec le premier élément de transmission (10) ou peut/peuvent être couplé(es) avec celui-ci par le biais de l'embrayage (14).

6. Dispositif d'entraînement selon l'une quelconque des revendications précédentes, **caractérisé en ce que** le troisième élément de transmission (12) est couplé ou peut être couplé par le biais d'une boîte de vitesse (16) avec l'arbre de sortie (6).

7. Dispositif d'entraînement selon l'une quelconque des revendications précédentes, **caractérisé en ce que** l'autre groupe d'entraînement (24) est couplé ou peut être couplé avec l'arbre d'entraînement annexe (29) de l'entraînement annexe (30) du dispositif d'entraînement (1).
